# EUROPÄISCHE PATENTANMELDUNG

(11) **EP 2 947 189 A1**
(43) Veröffentlichungstag der Anmeldung: **25.11.2015**
(21) Anmeldenummer: 15168228.3
(22) Anmeldetag: 19.05.2015
(51) Int. Cl.: D03D 15/00, D03D 15/06, D03D 27/02, D03D 27/10

(54) **GEWEBETEIL UND VERFAHREN ZUR HERSTELLUNG EINES DREIDIMENSIONALEN VORFORMTEILS**

(30) Priorität: 20.05.2014 DE 102014107129
(71) Anmelder: Deutsche Institute für Textil- und Faserforschung Denkendorf, 73770 Denkendorf (DE)
(72) Erfinder: Fritz, Florian, 73770 Denkendorf (DE); Horter, Hansjürgen, 72644 Oberboihingen (DE); Bauder, Dr. Hans-Jürgen, 72766 Reutlingen (DE); Wolfrum, Jürgen, 73061 Ebersbach (DE)
(74) Vertreter: Rüger, Barthelt & Abel

(57) **Zusammenfassung**

Die Erfindung betrifft ein Gewebeteil (15) als Ausgangsteil (16) sowie ein Verfahren zur Herstellung eines Vorformteils, das als Basis für die Herstellung eines faserverstärkten Verbundmaterialteils dienen kann. Das als Ausgangsteil (16) dienende Gewebeteil (15) hat eine erste Gewebelage (20) und eine zweite Gewebelage (21). Zumindest in einer Gewebelage (20, 21) sind mehrere Verstärkungsfäden (22) vorhanden. Zumindest ein Teil der Verstärkungsfäden (22) bildet jeweils einen Polfaden (24), der an einer Wechselstelle (25) zwischen den beiden Gewebelagen (20, 21) einen Polfadenwechsel unter Bildung einer Polfadenschlaufe (26) ausführt. Die Polfadenschlaufe (26) ist um wenigstens einen Opferfaden (27) herumgeführt. Der Opferfaden (27) ist gegenüber den verwendeten Verstärkungsfäden (22) derart anders ausgeführt, dass er bei einer vorgegebenen äußeren Einwirkung, beispielsweise durch Wärme W reißt und/oder sich zumindest teilweise auflöst und/oder sich elastisch verformt und dadurch einen durch die Polfadenschlaufe (26) gebildeten Fadenvorrat für den Verstärkungsfaden (22) freigibt. Die Verstärkungsfäden (22) werden durch die vorgegebene äußere Einwirkung nicht beschädigt und insbesondere in ihrer Zugfestigkeit nicht beeinträchtigt.

## Beschreibung

Die Erfindung betrifft ein Gewebeteil, das zur Herstellung eines dreidimensionalen Vorformteils vorgesehen ist sowie ein Verfahren zur Herstellung eines dreidimensionalen Vorformteils.

Faserverstärkte Verbundwerkstoffteile sind lange bekannt. In der Regel wird ein Gewebe oder ein Gelege mit zugstabilen Verstärkungsfäden in eine Kunststoffmatrix zur Verstärkung des Kunststoffmaterials integriert. Solche Verbundwerkstoffteile aus faserverstärktem Kunststoff werden in vielen technischen Produkten eingesetzt, beispielsweise dort, wo leichte Teile mit hoher Zugstabilität benötigt werden.

Im Rahmen zur Herstellung eines derartigen faserverstärkten Verbundwerkstoffteils wird üblicherweise ein sogenanntes Vorformteil hergestellt, bei dem das Gelege oder Gewebe mit den Verstärkungsfäden in eine dreidimensionale Form gebracht wird, die nahe oder identisch ist mit der zu erzielenden Endform des Verbundwerkstoffteils. In dieser Vorform werden die Position und der Verlauf der Verstärkungsfäden fixiert. Wird ein herkömmliches Gewebe oder Gelege mit Verstärkungsfäden eingesetzt, ist die Drapierbarkeit der Verstärkungslage bei der Herstellung der Vorform durch die Textilkonstruktion begrenzt. Darüber hinaus ist es bei einem herkömmlichen Gewebe oder Gelege schwierig, die Abstände und die Orientierung der Verstärkungsfäden bei der Herstellung der dreidimensionalen Vorform aufrecht zu erhalten.

Aus DE 10 2011 102 342 A1 ist in textiles Flächengebilde sowie ein Verfahren zur Herstellung von Verbundwerkstoffen bekannt. Das dort beschriebene textile Flächengebilde weist mehrere Doppellagen auf. Jede Doppellage besteht aus zwei Schichten, nämlich einer Schicht aus strukturiert angeordneten Verstärkungsfäden und eine Schicht aus thermoplastischen Matrixfäden. Die beiden Schichten sind durch Bindefäden miteinander verbunden und bilden die Doppellage. Die Matrixfäden stellen die Kunststoffmatrix bereit, um beim Herstellen des Verbundwerkstoffteils mit der Schicht aus Verstärkungsfäden zu verschmelzen. Mit anderen Worten wird durch die Schicht aus Matrixfäden eine bestimmte Menge Kunststoffmaterial für das spätere Herstellen des faserverstärkten Verbundwerkstoffteils bereitgestellt. Auch hier ist es nachteilig, dass die Drapierbarkeit des Flächengebildes durch die in der Verstärkungsschicht gebundenen Verstärkungsfäden eingeschränkt ist.

Eine ähnliche doppellagige Gewebestruktur ist auch aus EP 0 392 939 B1 bekannt. Auch dort weist die eine Gewebelage mehrheitlich Verstärkungsfäden und die andere Gewebelage mehrheitlich Fäden aus thermoplastischem Material zur Bereitstellung der thermoplastischen Matrix für den faserverstärkten Verbundwerkstoff auf.

Um die Drapierbarkeit eines Gewebes zu verbessern, schlägt EP 0 819 188 B1 ein Verfahren zum Weben einer dreidimensional geformten Gewebezone vor. Dabei wird bereits in der Webmaschine die Anzahl der Bindungspunkte zur Erzeugung einer dreidimensionalen Gewebezone verändert. Dies kann beispielsweise durch Variieren der Abzugsgeschwindigkeiten der diese Gewebezone durchlaufenden Kettfäden erreicht werden. Nachteilig ist dabei, dass die Fadendichte durch die geänderte Bindung in den später nicht dreidimensional ausgeformten Bereichen benachbart zu der dreidimensionalen Gewebezone vergrößert ist. Des Weiteren variiert die Gewebedicke in den unterschiedlichen Gewebezonen. Die Berechnung der Festigkeit des letztendlich hergestellten faserverstärkten Verbundwerkstoffs mit Hilfe dieses Gewebeteils ist schwierig, weil die Fadendichte innerhalb und außerhalb der Gewebezone stark variiert.

Es kann daher als Aufgabe der vorliegenden Erfindung angesehen werden, ein Gewebeteil sowie ein Verfahren zur Herstellung eines dreidimensionalen faserverstärkten Vorformteils zu schaffen, wobei eine gute Drapierbarkeit des Gewebeteils gewährleistet und die Berechnung der durch die Verstärkungsfäden des Gewebeteils bewirkten Zugfestigkeit vereinfacht ist.

Diese Aufgabe wird durch ein Gewebeteil gemäß einem der Patentansprüche 1 oder 13 sowie durch ein Verfahren mit den Merkmalen des Patentanspruches 14 gelöst.

Das Gewebeteil gemäß Patentanspruch 1 betrifft das Ausgangsteil, das mit Hilfe von bekannten Webmaschinen sehr einfach herzustellen ist. Das Gewebeteil weist eine erste Gewebelage auf, in der erste Schussfäden und erste Kettfäden miteinander in einer Bindung stehen. Außerdem ist eine zweite Gewebelage vorgesehen, in der zweite Schussfäden und zweite Kettfäden miteinander in einer Bindung stehen. Über Polfäden sind die beiden Gewebelagen miteinander verbunden. Vorzugsweise können die Kettfäden einer Gewebelage als Polfäden verwendet werden. Es können aber auch Schussfäden und/oder Kettfäden einer oder beider Gewebelagen als Pol- bzw. Verbindungsfäden eingesetzt werden.

Die Bindung innerhalb einer Gewebelage ist beliebig wählbar, es können Bindungsarten wie Leinwandbindung und/oder Atlasbindung und/oder Köperbindung allein oder in Kombination eingesetzt werden.

Zumindest in einer der beiden Gewebelagen sind mehrere oder alle Schussfäden und/oder Kettfäden als Verstärkungsfäden ausgeführt. Vorzugsweise dienen mehrere oder alle Kettfäden als Verstärkungsfäden für die Gewebelage. Die Verstärkungsfäden haben gegenüber den anderen Schuss. bzw. Kettfäden des Gewebeteils eine größere Zugstabilität. Die Verstärkungsfäden können zur Erhöhung der Zugstabilität ein oder mehrere der folgenden Materialien aufweisen oder aus einem oder mehreren dieser Materialien bestehen: Kohlenstoff, Keramik, Glas, Silikat, beispielsweise Basalt, Siliziumcarbid, Metall, beispielsweise Stahl, Aluminium oder Titan, Aramid, Kevlar, hochverstrecktes Polyethylen, organisches Hochtemperaturthermoplast, Flüssigkristallpolymer oder Polyvinylen-2,6-Benzobisoxazol (PBO). Die Fadenstärke der Verstärkungsfäden kann im Bereich zwischen 40 dtex und 35.000 dtex liegen.

Zumindest mehrere dieser Verstärkungsfäden bilden Polfäden. Jeder Polfaden hat eine oder mehrere Wechselstellen, an denen er aus der aktuellen Gewebelage in die jeweils andere Gewebelage und wieder zurück wechselt. Dabei bildet der Polfadern an jeder Wechselstelle jeweils eine Polfadenschlaufe. Die Polfadenschlaufe umschlingt in der jeweils anderen Gewebelage einen oder auch mehrere Opferfäden. Als Opferfaden dient ein Schussfaden oder Kettfaden der jeweils anderen Gewebelage. Ist der Polfaden durch einen Kettfaden gebildet, wird als Opferfaden ein Schussfaden der jeweils anderen Gewebelage verwendet und umgekehrt.

Durch die Polfadenschlaufen kann für den Verstärkungsfaden ein Fadenvorrat bzw. Längenvorrat bereitgestellt werden. Die Opferfäden sind in ihrer Garnkonstruktion und/oder in ihrer Garnstärke und/oder durch die Materialwahl so ausgeführt, dass sie durch eine vorgegebene äußere Einwirkung reißen und/oder sich plastisch dehnen und/oder zumindest teilweise aufschmelzen und/oder sich zumindest teilweise oder vollständig auflösen und dadurch die Polfadenschlaufen an den Wechselstellen freigeben. Demgegenüber bleiben zumindest die Verstärkungsfäden des Gewebeteils bei dieser vorgegebenen äußeren Einwirkung unbeschädigt. Die vorgegebene äußere Einwirkung kann bei einem Verfahren zur Herstellung des Vorformteils auf das oben beschriebene Gewebeteil einwirken, um eine zusätzliche Polfadenlänge durch die freigegebenen Polfadenschlaufen bereitzustellen. Dadurch wird eine verbesserte Drapierbarkeit des Gewebeteils erreicht. Um das Reißen und/oder plastische Verformen und/oder zumindest teilweise Aufschmelzen und/oder zumindest teilweise Auflösen der Opferfäden bei der vorgegebenen äußeren Einwirkung zu erreichen, können diese aus einem entsprechenden Material, mit einer entsprechend geringeren Fadenstärke oder einer schwächeren Fadenkonstruktion verglichen mit den Verstärkungsfäden ausgeführt sein.

Beispielsweise kann als vorgegebene äußere Einwirkung eine vorgegebene Zugkraft auf die Fäden des Gewebeteils einwirken, bei der die Opferfäden reißen, wohingegen zumindest die Verstärkungsfäden bzw. Polfäden unbeschädigt bleiben.

Alternativ oder zusätzlich kann als äußere Einwirkung eine körperlose Strahlung, beispielsweise eine Wärmestrahlung und/oder elektromagnetische Strahlung und/oder Ultraschallanregung mit einem vorgegebenen Energieeintrag pro Flächeneinheit verwendet werden. Dabei können sich die Opferfäden plastisch verformen oder schmelzen, während die Verstärkungsfäden unbeschädigt bleiben und insbesondere deren Zugfestigkeit nicht oder nicht maßgeblich beeinträchtigt wird.

Alternativ oder zusätzlich kann als vorgegebene äußere Einwirkung auch der Kontakt des Gewebeteils mit einem chemischen Mittel verwendet werden, durch das sich die Opferfäden zumindest teilweise auflösen, wohingegen dieses chemische Mittel die Verstärkungsfäden nicht beschädigt.

Wird als vorgegebene äußere Einwirkung der Energieeintrag in das Gewebeteil in Form von Wärme verwendet, kann die Wärme durch eine Wärmestrahlung und/oder eine Wärmeübertragung wie Wärmeleitung und/oder Wärmeströmung zugeführt werden. Beispielsweise kann das Gewebeteil in Kontakt mit Wärmeplatten oder erwärmten Formen zum Eintrag von Wärme gebracht werden.

Die Opferfäden können als Garne, Spinnfasergarne, Kompaktgarne, Endlosfasergarne, Stapelfasergarne, Zwirne, Monofilamente oder Multifilamente ausgeführt sein.

Insbesondere wenn die Opferfäden durch eine vorgegebene Einwirkung durch thermische Energie plastisch verformt oder zumindest teilweise aufgeschmolzen werden sollen, können die Opferfäden aus einem thermoplastischen Material, vorzugsweise einem thermoplastischen Polymer hergestellt sein. Der Schmelzbereich der Opferfäden kann beispielsweise zwischen 50° Celsius und 480° Celsius liegen.

Die Opferfäden können beispielweise aus einem oder mehreren der folgenden Materialien bestehen oder eines oder mehrere dieser Materialien aufweisen: Polypropylen (PP), Polyethylen (PE), expandiertes Polyethylen (EPE), fluoriertes Ethylen-Propylen (FEP), Polyester, Polyethylenterephthalat (PET), Polyethersulfon (PES), Polyphylensulfid (PPS), Polybutylenterephthalat (PBT), Polaymid wie beispielsweise PA11, PA12, PA6.10, PA6, PA6.6, PA4.1, Polybenzimidazol (PBI), Polyvinylidenchlorid (PVDC), Polyvenylidenfluorid (PVDF), Perfluoroxylalkan (PFA), Polyetherimid (PEI), Polyetherketon (PEEK).

Die Opferfäden weisen vorzugsweise eine geringere Fadenstärke auf als die Verstärkungsfäden. Die Garnstärke der Opferfäden kann im Bereich von 40 dtex bis 35.000 dtex liegen.

Wenn die äußere Einwirkung zum zumindest teilweise Auflösen der Opferfäden durch den Kontakt des Gewebeteils mit einem chemischen Mittel erfolgt, wird als chemisches Mittel ein Lösemittel verwendet, das die Verstärkungsfäden nicht beschädigt, jedoch die Opferfäden zumindest teilweise auflöst. Als Lösemittel kann beispielsweise Aceton verwendet werden. Die Verstärkungsfäden können beispielsweise aus Glas bestehen oder eine Glasbeschichtung aufweisen. Die Opferfäden können beispielsweise Acrylnitril-Butadien-Styrol

(ABS) aufweisen oder daraus bestehen. Das Lösemittel kann als Gas, Dampf oder Flüssigkeit in Kontakt mit den Fäden gebracht werden. Beispielsweise kann als Acetondampf in einer Verdampfungsanlage erzeugt werden oder es kann ein Tauchbad zum Eintauchen des Gewebeteils bereitgestellt werden.

Bei dem Gewebeteil sind vorzugsweise die Positionen und/oder die Anzahl der Wechselstellen und/oder der Abstand der beiden Gewebelagen an den jeweiligen Wechselstellen abhängig von der herzustellenden dreidimensionalen Form vorgegeben. Beim Weben des Gewebeteils steht die mit dem Gewebeteil herzustellende Form bereits fest. Das Gewebeteil dient bei dieser Ausführung nicht dazu, später in eine beliebige dreidimensionale Form gebracht zu werden. Vielmehr ist es an die konkret herzustellende Form angepasst. Der an den Wechselstellen bereitgestellte Fadenvorrat der Polfäden (Verstärkungsfäden) ist genau so dimensioniert, dass sich beim Drapieren die gewünschte dreidimensionale Form erreichen lässt und die Verstärkungsfäden keine unnötigen Schlaufen oder Wellenverläufe aufweisen. Denn dadurch könnte die Zugsteifigkeit bzw. die Zugfestigkeit des herzustellenden Verbundmaterials vermindert werden. Die Verstärkungsfäden sollen in ihrer jeweiligen Erstreckungsrichtung angepasst an die herzustellende Form möglichst gestreckt angeordnet sein, wobei eine gewisse durch die Gewebebindungen verursachte Welligkeit toleriert werden kann.

Somit können beispielsweise Verstärkungsfäden, die in der herzustellenden dreidimensionalen Form in einer durch die Gewebelage definierten Bezugsebene verlaufen, ohne Bildung einer Polfadenschlaufe ausschließlich in der einen Gewebelage gebunden sein. Andere Verstärkungsfäden, die bei der Herstellung der dreidimensionalen Form aus der Bezugsebene herausgeführt werden sollen, sind als Polfaden ausgeführt und weisen jeweils eine oder mehrere Polfadenschlaufen auf.

Wie bereits erläutert, hängt die Anzahl, die Position und gegebenenfalls die Länge einer Polfadenschlaufe - die durch den Abstand der Gewebelagen definiert ist - von der später herzustellenden Form ab. Somit können verschiedene Polfäden auch unterschiedlich viele und/oder unterschiedliche lange Polfadenschlaufen und/oder Polfadenschlaufen an unterschiedlichen Positionen aufweisen.

Das Gewebeteil mit den beiden Gewebelagen kann als Doppelgewebe ausgeführt sein und ist vorzugsweise in Form eines Abstandsgewebes realisiert, bei denen die beiden Gewebelagen einen größeren Abstand von einigen Millimetern bis hin zu einigen Zentimetern aufweisen. Der Abstand zwischen den beiden Gewebelagen kann beim Weben beispielsweise durch Lanzetten und/oder durch Blindschüsse oder durch andere geeignete Maßnahmen erreicht werden, die bei der Herstellung von Abstandsgeweben an sich bekannt sind. Der Blindschuss kann die Funktion des Opferfadens erfüllen.

Üblicherweise werden die Polfäden durch Kettfäden gebildet. Hierfür kann beispielsweise eine Jacquard-Webmaschine verwendet werden. Es ist alternativ oder zusätzlich auch möglich, einen oder mehrere Schussfäden jeweils als Polfaden auszubilden. Hierfür kann beispielsweise ein in ein Webfach eingetragener Schussfaden zur Bildung einer Polfadenschlaufe mit Hilfe eines Hakenelements zwischen zwei Kettfäden gezogen werden. Bei einem anschließenden Fachwechsel kann dann die herausgezogene Schlaufe des Schussfadens fixiert werden.

Mit anderen Worten ist es bei der Erfindung möglich, die als Polfäden ausgeführten Verstärkungsfäden durch erste und/oder zweite Schussfäden und/oder durch erste und/oder zweite Kettfäden zu bilden. Dadurch kann eine Erhöhung der Zugstabilität nicht nur in einer Richtung (Kette oder Schuss), sondern auch in zwei im Wesentlichen rechtwinklig zueinander stehenden Richtungen ausgeführt werden. Es ist dabei beispielsweise auch möglich, in einer Gewebelage die Verstärkungsfäden nur als Kettfäden auszuführen und in der anderen Gewebelage die Verstärkungsfäden nur als Schussfäden auszuführen. Wie oben erläutert können aber auch in einer oder beiden Gewebelagen sich kreuzende Verstärkungsfäden vorhanden sein.

Wenn die Opferfäden aus thermoplastischem Material bestehen und zur Herstellung des faserverstärkten Verbundmaterialteils zur Herstellung der Kunststoffmatrix beitragen, kann der Faservolumenanteil der Opferfäden von 40% bis zu 60% des Gewebeteils betragen. Allgemein kann der Anteil der Opferfäden von 5% bis zu 95% betragen und der jeweils verbleibende Faservolumenanteil durch die Verstärkungsfäden gebildet sein.

Bei einem Gewebeteil, das als Zwischenprodukt zur Herstellung des Vorformteils verwendet wird, kann lediglich eine Gewebelage und optional wenigstens eine weitere Gewebelage vorhanden sein. In der einen Gewebelage sind zumindest einige der Schussfäden und/oder Kettfäden als Verstärkungsfäden ausgeführt. In wenigstens einem Gewebebereich dieser Gewebelage stellen die durch diesen Gewebebereich hindurch verlaufenden Verstärkungsfäden einen zusätzlichen Fadenvorrat bereit und sind in diesem Abschnitt nur schlaff mit den jeweils anderen Fäden gebunden. Unter dieser schlaffen Bindung ist eine Bindung zu verstehen, bei der der betreffende Verstärkungsfaden sich nicht unter einer möglichst großen Streckung durch den Gewebebereich hindurch erstreckt, sondern eine oder mehrere Fadenschlaufen aufweist, die eine zur Bindung mit den anderen Fäden nicht notwendige zusätzliche Fadenlänge und mithin einen Fadenvorrat bereitstellen. Dadurch lassen sich die durch den Abschnitt hindurch verlaufenden Verstärkungsfäden aus der Bezugsebene der Gewebelage heraus drapieren, um die gewünschte dreidimensionale Form zu erreichen. Die anderen Fäden (Schussfäden oder Kettfäden) die mit den Verstärkungsfäden in dem wenigstens einen Gewebebereich in Bindung stehen, können beim Drapieren der Verstärkungsfäden gedehnt und beispielsweise plastisch verformt werden. Um die Drapierbarkeit der Verstärkungsfäden in diesen wenigstens einen Abschnitt zu gewährleisten, können die mit diesen Verstärkungsfäden in dem Abschnitt ursprünglich gebundenen anderen Fäden auch aufgetrennt oder teilweise oder vollständig ausgelöst werden.

Der Fadenvorrat der Verstärkungsfäden kann durch Fadenschlaufen eines Polfadens eines Gewebes mit zwei oder mehr Gewebelagen gebildet werden. Die Fadenschlaufen verlaufen dabei um einen Opferfaden in der jeweils anderen Gewebelage. Es ist möglich, dass der Opferfaden - wie vorstehen beschrieben - als Blindschuss oder Schleifenschuss in den Polschlaufen liegt und einfach entnommen werden kann. Bei anderen Geweben mit mehreren Gewebelagen, kann der Opferfaden durch eine geeignete äußere Einwirkung die Polschlaufen freigeben, in dem der Opferfaden beispielsweise aufgeschmolzen und/oder aufgelöst und/oder getrennt wird.

Bei einem erfindungsgemäßen Verfahren zur Herstellung eines dreidimensionalen Vorformteils werden vorzugsweise folgende Schritte ausgeführt:

Zunächst wird ein Gewebeteil mit einer ersten Gewebelage und einer zweiten Gewebelage wie oben beschrieben hergestellt oder bereitgestellt. Anschließend werden zumindest die Opferfäden plastisch gedehnt und/oder getrennt und/oder entfernt und/oder zumindest teilweise geschmolzen und/oder zumindest teilweise aufgelöst, um die die Polfadenschlaufen der Verstärkungsfäden aus der jeweils anderen Gewebelage herumgeführt sind. Wenn der Opferfaden durch einen Blindschuss - auch Schleifenschuss genannt - erzeugt wurde, liegt dieser ohne Bindung lose in den Schlaufen und kann einfach herausgezogen bzw. entfernt werden, um die Polschlaufen freizugeben. Dadurch werden an jeder Wechselstelle eines Polfadens die Polfadenschlaufen freigegeben und stehen für eine dreidimensionale Umformung der Gewebelage zur Verfügung.

Es ist möglich, bei diesem Verfahren die Opferfäden zumindest teilweise zu schmelzen und/oder zumindest teilweise aufzulösen und/oder zu dehnen und/oder durchzureißen, während das Gewebeteil in seine dreidimensionale Form drapiert wird. Beispielsweise kann das Gewebeteil in eine Pressform eingelegt werden. In dieser Pressform kann die äußere Einwirkung beispielsweise durch Wärme und/oder durch mechanische Zugkräfte auf die Opferfäden einwirken.

Es ist weiterhin vorteilhaft, wenn sich beim Drapieren des Gewebeteils der Abstand und/oder die Länge der die Polfäden bindenden Fäden benachbart zum Bereich eines freigegebenen Polfadenabschnitts ändert. Wird als Polfaden beispielsweise ein erster oder zweiter Kettfaden verwendet, ändern sich die Abstände und/oder sie Längen der mit diesem Polfaden benachbart zum Bereich der freigegebenen Polfadenschlaufe in Bindung stehenden Schussfäden beim Drapieren des Gewebeteils. Handelt es sich bei dem Polfaden um einen Schussfaden, so ändern sich entsprechend der Abstand und/oder die Längen der Kettfäden, die benachbart zum Bereich der Polfadenschlaufe mit dem Polfaden in Bindung stehen. Da nicht die anderen, nicht als Verstärkungsfäden ausgeführten Fäden für die Zugstabilität des herzustellenden faserverstärkten Verbundmaterialteils keine oder lediglich eine geringe Bedeutung haben, ist deren Längen- und/oder Abstandsänderung beim Drapieren tolerierbar.

Zum wenigstens teilweisen Auflösen und/oder Dehnen und/oder Trennen der Opferfäden kann das Gewebeteil beispielsweise auf eine Temperatur erwärmt werden, die zumindest der Fließtemperatur der Opferfäden entspricht und unterhalb der Fließtemperatur der Verstärkungsfäden liegt. Das Erwärmen des Gewebeteils kann beispielsweise in einer Pressform erfolgen. In dieser Pressform kann das Gewebeteil anschließend verformt werden, um die dreidimensionale Form des Vorformteils einzunehmen. Anschließend kann das Gewebeteil in der Pressform oder außerhalb der Pressform abgekühlt werden, so dass das Vorformteil die vorgegebene dreidimensionale Form beibehält.

Aus diesem Vorformteil kann anschließend das faserverstärkte Verbundwerkstoffteil hergestellt werden. Hierzu wird vorzugsweise das Vorformteil in eine Kunststoffmatrix integriert. Dabei kann die dreidimensionale Form des Vorformteils beim Herstellen des faserverstärkten Verbundwerkstoffteils verändert werden.

Vorteilhafte Ausgestaltungen der Erfindung ergeben sich aus den abhängigen Patentansprüchen, der Beschreibung und der Zeichnung. Nachfolgend werden bevorzugte Ausführungsbeispiele anhand der beigefügten Zeichnung im Einzelnen erläutert. Es zeigen:
Figur 1 eine schematische Ansicht eines Gewebeteils mit zwei Gewebelagen in einer Seitenansicht,
Figur 2 das Gewebeteil nach Figur 1 unter Einfluss einer vorgegebenen äußeren Einwirkung,
Figur 3 das Gewebeteil aus den Figuren 1 und 2 nach der äußeren Einwirkung,
Figur 4 die beiden voneinander getrennten Gewebelagen des Gewebeteils aus den Figuren 1 bis 3,
Figur 5 eine beispielhafte schematische Querschnittskontur einer Form, in die zumindest eine der beiden Gewebelagen aus Figur 4 eingelegt werden kann,
Figuren 6 und 7 das Einlegen und Umformen eines Gewebeteils gemäß Figur 1 mit Hilfe einer Pressform,
Figur 8 eine schematische Seitenansicht eines abgewandelten Ausführungsbeispiels eines Gewebeteils mit zwei Gewebelagen,
Figur 9 eine schematische Seitenansicht eines weiteren Ausführungsbeispiels eines Gewebeteils mit zwei Gewebelagen und
Figur 10 eine schematische perspektivische Ansicht eines beispielhaften dreidimensionalen Vorformteils.

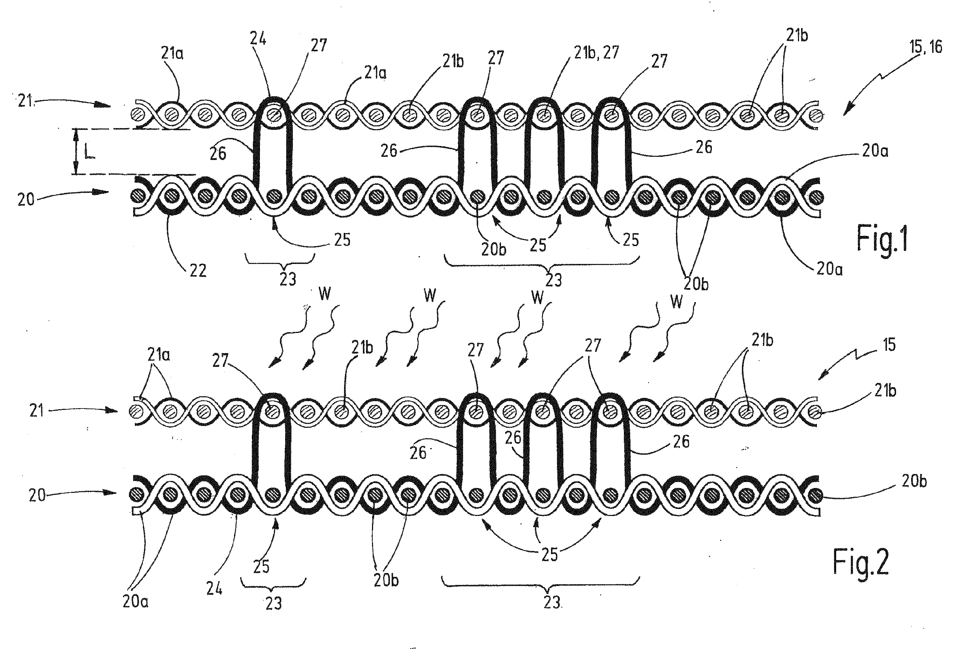

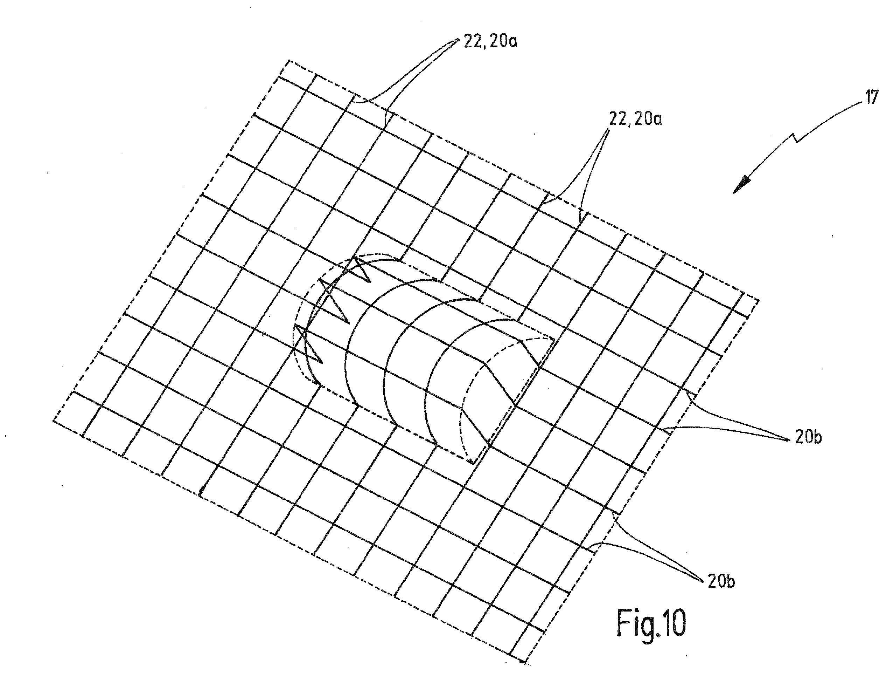

In Figur 1 ist schematisch ein Gewebeteil 15 veranschaulicht, das ein Ausgangsteil 16 für die Herstellung eines Vorformteils 17 (Figur 10) bzw. eines faserverstärkten Verbundwerkstoffteils darstellt. Solche faserverstärkten Verbundwerkstoffteile werden in der Regel ausgehend von einem Vorformteil 17 hergestellt. Das Vorformteil 17 stellt somit ein Zwischenprodukt bei der Herstellung eines faserverstärkten Verbundwerkstoffteils dar. Es sei an dieser Stelle darauf hingewiesen, dass die in Figur 10 dargestellte schematische Gestalt des Vorformteils 17 lediglich beispielhaft gewählt ist. Das Gewebeteil 15 bzw. das Ausgangsteil 16 kann so ausgestaltet werden, dass sich nahezu beliebige dreidimensionale Vorformteile 17 herstellen lassen.

Das als Ausgangsteil 16 dienende Gewebeteil 15 weist eine erste Gewebelage 20 und eine zweite Gewebelage 21 auf. Beispielsgemäß ist das Gewebeteil 15 als Abstandsgewebe ausgeführt, so dass die beiden Gewebelagen 20, 21 mit einem entsprechenden Lagenabstand L zueinander angeordnet sind.

Die erste Gewebelage 20 weist erste Kettfäden 20a und erste Schussfäden 20b auf, die miteinander in einer Bindung stehen. In Figur 1 sind schematisch in der Seitenansicht lediglich zwei der ersten Kettfäden 20a veranschaulicht. Entsprechend weist die zweite Gewebelage 21 zweite Kettfäden 21a und zweite Schussfäden 21b auf, wobei auch hier lediglich zwei der vorhandenen Kettfäden 21a veranschaulicht sind.

Zumindest eine der beiden Gewebelagen 20, 21 weist Verstärkungsfäden 22 auf. Der Verstärkungsfaden 22 kann durch einen Kettfaden 20a bzw. 21a und/oder durch einen Schussfaden 20b bzw. 21b gebildet sein. Bei dem in Figur 1 veranschaulichten Ausführungsbeispiel des Gewebeteils 15 sind in der ersten Gewebelage 20 Verstärkungsfäden 22 eingewebt, die beispielsgemäß durch jeweils einen ersten Kettfaden 20a gebildet sind.

Die beiden Gewebelagen 20, 21 erstrecken sich jeweils im Wesentlichen in einer Bezugsebene, die durch die Verlaufsrichtung der Schussfäden 20b bzw. 21b und der damit in Bindung stehenden Kettfäden 20a bzw. 21a definiert ist.

Die Verstärkungsfäden 22 können ausschließlich innerhalb einer Gewebelage 20 bzw. 21 und beispielsgemäß der ersten Gewebelage 20 verlaufen. Zumindest in einem Gewebebereich 23 bilden mehrere Verstärkungsfäden 22 jeweils einen Polfaden 24, der an einer Wechselstelle 25 aus der ersten Gewebelage 20 heraus um einen Faden der zweiten Gewebelage 21 herum und wieder zurück verläuft. Der Polfaden 24 bildet somit an jeder Wechselstelle 25 eine Polfadenschlaufe 26. Da die Polfäden 24 beispielsgemäß durch Kettfäden 20a gebildet sind, verlaufen die Polfadenschlaufen 26 an jeder Wechselstelle 25 um einen zweiten Schussfaden 21b der zweiten Gewebelage 21 herum und zurück in die erste Gewebelage 20.

Die Position und die Anzahl der Wechselstellen 25 und mithin der Polfadenschlaufen 26 hängt von der dreidimensionalen Form ab, die die herzustellende Vorform 17 bzw. das daraus schließlich herzustellende faserverstärkte Verbundwerkstoffteil erhalten soll. Durch die Polfadenschlaufen 26 wird für die Verstärkungsfäden 22 ein Fadenvorrat gebildet. Da die Verstärkungsfäden 26 zur Erzielung der Zugfestigkeit quasi nicht dehnbar sind, wird durch die zusätzliche Länge, die durch die Polfadenschlaufen 26 erreicht ist, eine verbesserte Drapierbarkeit des Gewebeteils 15 erreicht, was nachfolgend noch genauer erläutert werden wird. Die Position und/oder die Anzahl der Wechselstellen 25 und Polfadenschlaufen 26 werden daher vor dem Herstellen des Gewebeteils 15 anhand der herzustellenden dreidimensionalen Form ermittelt. Die Webmaschine, beispielsweise eine Jacquard-Webmaschine, wird entsprechend gesteuert, so dass nur an den vorherbestimmten definierten Wechselstellen 25 ein Polfadenwechsel von einer Gewebelage 20 oder 21 in die jeweils andere Gewebelage 21 bzw. 20 stattfindet.

Jede Polfadenschlaufe 26 erstreckt sich beispielsgemäß um einen zweiten Schussfaden 21b der zweiten Gewebelage 21. Dieser zweite Schussfaden 21b ist als Opferfaden 27 ausgeführt. Der Opferfaden 27 ist durch seine Garnstruktur und/oder sein Material und/oder seine Fadenstärke derart gestaltet, dass er bei einer vorgegebenen äußeren Einwirkung plastisch verformt und insbesondere plastisch gedehnt wird und/oder zumindest teilweise aufgelöst und insbesondere aufgeschmolzen und/oder vollständig aufgelöst bzw. entfernt wird. Somit kann durch eine vorgegebene äußere Einwirkung der Opferfaden 27 an der Wechselstelle 25 die Polfadenschlaufe 26 freigeben, so dass für den Polfaden 24 eine zusätzliche Fadenlänge und mithin ein Fadenvorrat freigeben wird. Dieser Fadenvorrat wird verwendet, um das Gewebeteil 15 oder zumindest die erste Gewebelage 20 in die gewünschte dreidimensionale Form zu bringen.

Die vorgegebene Einwirkung kann durch Aufbringen eines chemischen Mittels auf das Gewebeteil 15 erfolgen, bei dem sich die Opferfäden 27 zumindest teilweise und zumindest an den Wechselstellen 25 auflösen bzw. auftrennen. Beispielsweise kann das Gewebeteil 15 in ein Lösemittelbad getaucht oder mit einem Lösemitteldampf beaufschlagt werden. Als Lösemittel kann beispielsweise Aceton verwendet werden. Die Opferfäden 27 können in diesem Fall aus Acrylnitril-Butadien-Styrol (ABS) bestehen. Um ein Beschädigen und Beeinträchtigen der Zugfestigkeit der Verstärkungsfäden 22 zu vermeiden, bestehen die Verstärkungsfäden aus einem durch das Lösemittel nicht angreifbaren Material und im Falle von Aceton beispielsweise aus Glas.

Die vorgegebene äußere Einwirkung auf die Opferfäden 27 kann auch durch eine körperlose Strahlung, wie Ultraschallwellen, Infrarotstrahlung oder eine andere geeignete elektromagnetische Strahlung erfolgen. Auch hierbei muss dafür gesorgt werden, dass die eingetragene Energie die Verstärkungsfäden 22 nicht beschädigt, sondern lediglich die Opferfäden 27 trennt oder zumindest teilweise auflöst.

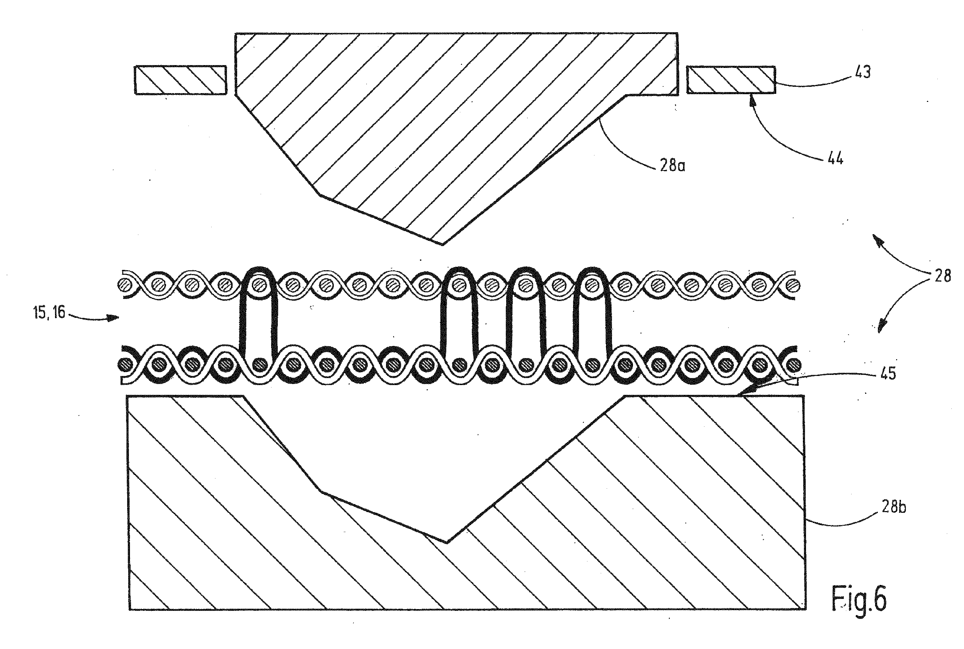

Es ist auch möglich, als äußere Einwirkung auf die Opferfäden 27 Wärme W auf das Gewebeteil 15 aufzubringen (Figur 2). Die Wärme kann durch Wärmestrahlung oder eine andere Wärmeübertragung auf das Gewebeteil 15 aufgebracht werden. Beispielsweise kann das Gewebeteil 15 in Kontakt mit erwärmten Platten oder einer aufgewärmten Pressform 28 gebracht werden (Figur 6).

Beim Erwärmen wird das Gewebeteil 15 vorzugsweise auf eine Temperatur gebracht, die zumindest so groß ist wie die Fließgrenze der Opferfäden 27 und kleiner als die Fließgrenze der Verstärkungsfäden 22. Wenn die Opferfäden 27 durch die Wärme W zumindest teilweise aufgeschmolzen werden sollen, werden vorzugsweis Opferfäden aus einem thermoplastischen Material und insbesondere aus einem thermoplastischen Polymer verwendet. Abgesehen von den Verstärkungsfäden 22 können alle anderen im Gewebeteil 15 verwendeten Fäden aus thermoplastischem Polymer bestehen. Dabei können die Opferfäden 27 eine geringe Fließgrenze aufweisen, als die anderen Fäden aus thermoplastischem Polymer. Auf diese Weise werden durch die vorgegebene äußere Einwirkung zunächst nur die Opferfäden 27 aufgelöst, während die übrigen thermoplastischen Fäden zur Positionierung der Verstärkungsfäden 22 zunächst erhalten bleiben. Diese können in einem nachfolgenden Schritt durch eine zunehmende Erwärmung zumindest teilweise aufgeschmolzen werden, um eine plastische formerhaltende Verbindung mit den Verstärkungsfäden 22 zur Herstellung der Vorform 17 einzugehen.

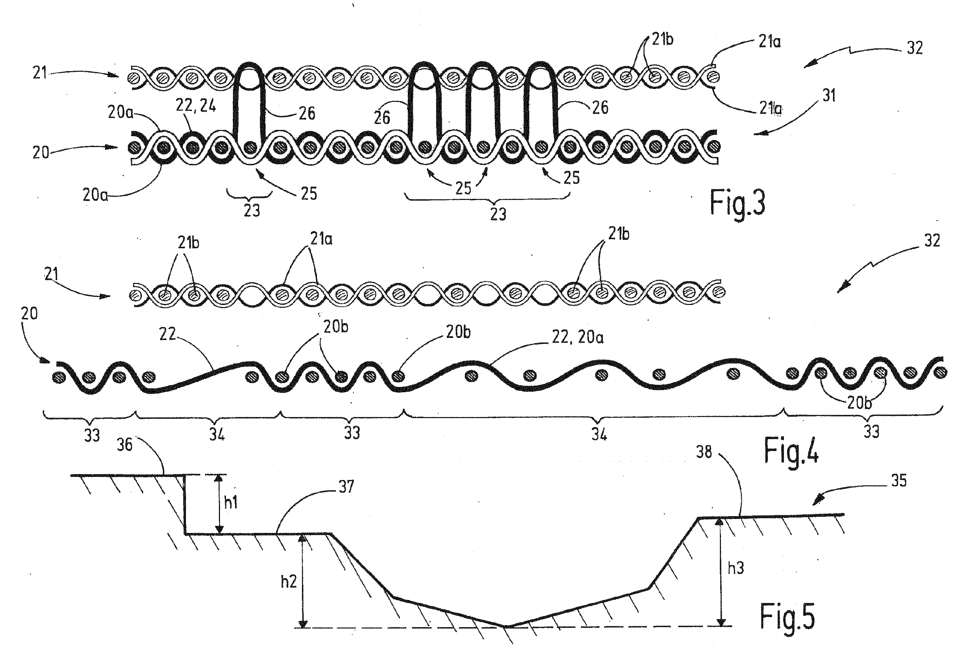

In den Figuren 2 und 3 ist in Zusammenhang mit dem ersten Ausführungsbeispiel des Gewebeteils 15 das Erwärmen des Gewebeteils 15 durch Wärme W als vorgegebene äußere Einwirkung zum Aufschmelzen der Opferfäden 27 veranschaulicht. Wie in Figur 3 dargestellt, sind die Polfadenschlaufen 26 nach dem Aufschmelzen der Opferfäden 27 freigegeben. Die erste Gewebelage 20 kann anschließend völlig unabhängig von der zweiten Gewebelage 21 drapiert werden (Figur 4).

Es ist auch möglich, alle zweiten Kettfäden 21a und alle zweiten Schussfäden 21b als Opferfäden 27 auszuführen und die zweite Gewebelage 21 durch die vorgegebene äußere Einwirkung (hier: Wärme W) aufzulösen.

Nach dem Freigeben der Polfadenschlaufen 26 sind die beiden Gewebelagen 20, 21 beispielsgemäß vollständig voneinander trennbar (Figur 4). Das Ausgangsteil 16 wurde durch die vorgegebene äußere Einwirkung - beispielsgemäß Wärme W - bearbeitet und dadurch ein Gewebeteil hergestellt, das als Zwischenprodukt für das weitere Verfahren dient und daher als Zwischenprodukt-Gewebeteil 32 bezeichnet werden kann.

Das Zwischenprodukt-Gewebeteil 32 weist zumindest die Gewebelage auf, in der die Verstärkungsfäden 22 gebunden sind, beispielsgemäß die erste Gewebelage 20. Das Zwischenprodukt-Gewebeteil 32 kann also auch beide Gewebelagen 20, 21 aufweisen. In Erstreckungsrichtung der Verstärkungsfäden 22, beispielsgemäß in Kettfadenrichtung, hat das Gewebeteil erste Gewebeabschnitte 33 und zweite Gewebeabschnitte 34. In den ersten Gewebeabschnitten 33 sind die Verstärkungsfäden 22 mit einer vorgegebenen Bindung möglichst gestreckt angeordnet. Es versteht sich, dass aus technischen Gründen eine gewisse Welligkeit der Verstärkungsfäden 22 auch in den ersten Gewebeabschnitten 33 erforderlich ist, um die vorgegebene Bindung herzustellen. Die zweiten Gewebeabschnitte 34 sind durch eine schlaffe Anordnung der durch diesen jeweiligen zweiten Gewebeabschnitt 34 hindurch erstreckenden Verstärkungsfäden 22 gekennzeichnet. Die zweiten Gewebeabschnitte 34 können sich in Kettfadenrichtung und/oder in Schussfadenrichtung entlang des gesamten Zwischenprodukt-Gewebeteils 32 erstrecken oder in Kettfadenrichtung und/oder in Schussfadenrichtung kürzer sein als das Zwischenprodukt-Gewebeteil 32. Somit können die zweiten Gewebeabschnitte 34 beispielsweise Streifen oder Inseln mit beliebiger Kontur im Zwischenprodukt-Gewebeteil 32 bilden.

Die zweiten Gewebeabschnitte 34 sind beispielsgemäß durch einen jeweiligen Gewebebereich 23 des Ausgangsteils 16 bzw. des ursprünglichen Gewebeteils 15 gebildet. Durch die Freigabe des Fadenvorrats, der aus den Polfadenschlaufen 26 resultiert, sind die Verstärkungsfäden 22 in den zweiten Gewebeabschnitten 34 sozusagen verlängert, so dass die Verstärkungsfäden 22 aus der Erstreckungsebene bzw. Bezugsebene der Gewebelage heraus geführt und an eine herzustellende dreidimensionale Form 35 angepasst werden kann.

Um das Zwischenprodukt-Gewebeteil 32 in die lediglich beispielhaft in Figur 5 veranschaulichte Form 35 drapieren zu können sind beispielsweise zwei zweite Gewebeabschnitte 34 vorhanden. Die Form 35 weist beispielsgemäß eine Ausgangsebene 36 auf, die über einen Absatz mit einer ersten Höhe h1 in eine erste Zwischenebene 37 übergeht. Ausgehend von der ersten Zwischenebene 37 ist eine Vertiefung vorgesehen, deren tiefster Punkt um eine zweite Höhe h2 von der ersten Zwischenebene 37 beabstandet ist, und die sich ausgehend vom tiefsten Punkt um eine dritte Höhe h3 bis zu einer zweiten Zwischenebene 38 erstreckt. Zwischen der Ausgangsebene 36 und der zweiten Zwischenebene 38 muss also quer zur Bezugsebene Erstreckungsebene der ersten Gewebelage 20 gesehen eine Gesamthöhe hg durch den Verstärkungsfaden 22 überwunden werden, die der Summe aus der ersten Höhe h1, der zweiten Höhe h2 und der dritten Höhe h3 entspricht. Zur Überwindung der ersten Höhe h1 zwischen der Ausgangsebene 36 und der ersten Zwischenebene 37 dient ein zweiter Gewebeabschnitt 34, indem eine zusätzliche Länge für den Verstärkungsfaden 22 durch beispielsgemäß eine einzige Polfadenschlaufe 26 bereitgestellt wurde. Zur Überwindung der zweiten Höhe h2 und der dritten Höhe h3 zwischen den beiden Zwischenebene 37, 38 dient ein weiterer zweiter Gewebeabschnitt 34, in dem mehrere und beispielsgemäß drei Polfadenschlaufen 26 vorhanden sind, die dem beispielhaft veranschaulichten Verstärkungsfaden 22 eine zusätzliche Länge zur Anpassung an die Form 35 verleihen.

Die Anzahl und/oder die Länge der Polfadenschlaufen 26 in einem zweiten Gewebeabschnitt 34 kann - abhängig von der herzustellenden dreidimensionalen Form - für mehrere Polfäden 24 unterschiedlich sein. Die Anzahl und/oder die Länge der Polfadenschlaufen 26 eines Polfadens ist so vorgegeben, dass die dadurch verfügbare zusätzliche Polfadenlänge an die diesem Polfaden 24 zugeordneten Querschnittskontur der herzustellenden dreidimensionalen Form angepasst ist. Unter der Anpassung an die zugeordnete Querschnittskontur ist zu verstehen, dass der Polfaden 24 für das Drapieren eine Zusatzlänge erhält, um die er entlang der durch die herzustellende dreidimensionale Form definierten Querschnittskontur aus der Bezugsebene der Gewebelage heraus und gegebenenfalls wieder in diese Bezugsebene zurück geführt werden muss. Dabei solle der Polfaden 24 keine unnötige Länge aufweisen, um die Zugsteifigkeit bzw. die Zugfestigkeit des letztendlich hergestellten faserverstärkten Verbundwerkstoffteils nicht negativ zu beeinflussen.

Im Bereich der zweiten Gewebeabschnitte 34 sind die ersten Schussfäden 20b vorzugsweise dehnbar, so dass die durch die ersten Kettfäden 20a gebildeten Verstärkungsfäden 22 parallel zueinander verlaufen können.

Es versteht sich, dass die Form 35 lediglich ein Beispiel ist. Abhängig von der gewünschten Formgebung variiert die Anzahl und/oder die Position der Wechselstellen 25, um nach dem Lösen der Opferfäden 27 jeweils einen betreffenden zweiten Gewebeabschnitt 34 im Zwischenprodukt-Gewebeteil 32 zu bilden.

Nach dem Umformen des Zwischenprodukt-Gewebeteils 32 können die Verstärkungsfäden 22 zur Bildung des Vorformteils 17 in der jeweils dreidimensional drapierten Lage fixiert werden. Beispielsweise können die Verstärkungsfäden 22 miteinander verklebt werden. Dies kann durch ein Bindemittel erfolgen. Beispielsweise können die mit den Verstärkungsfäden 22 in Bindung stehenden anderen Fäden, beim Ausführungsbeispiel die ersten Schussfäden 20b, mit den Verstärkungsfäden 22 verklebt werden. Die ersten Schussfäden 20b können beispielsweise durch Wärmeeinwirkung aufschmelzen und mit den Verstärkungsfäden 22 verkleben.

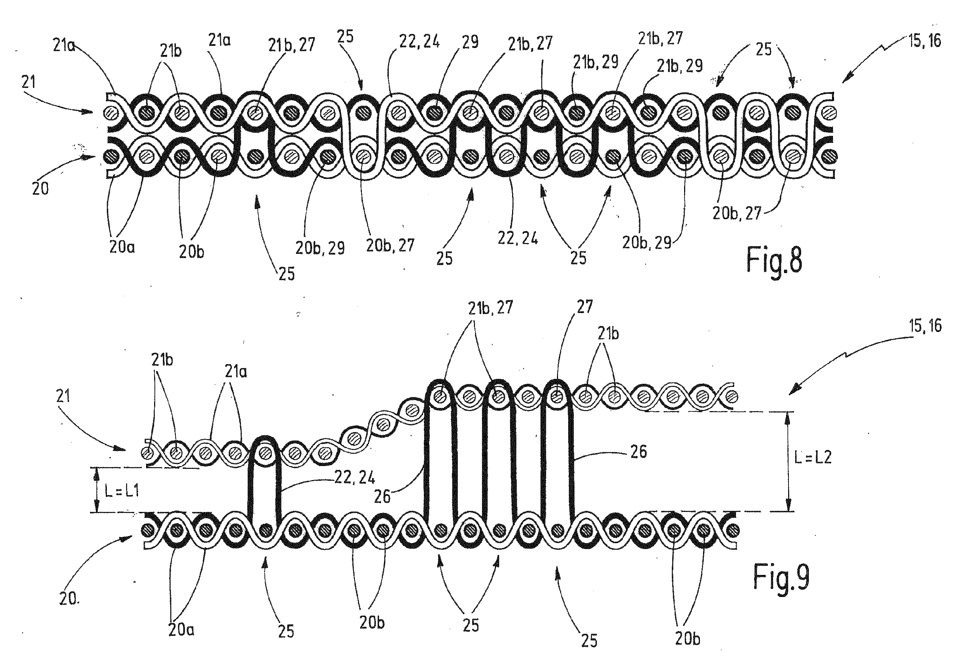

In Figur 9 ist ein abgewandeltes Ausführungsbeispiel eines Gewebeteils 15 bzw. eines Ausgangsteils 16 veranschaulicht. Der Lagenabstand L ist bei diesem Ausführungsbeispiel variabel und an verschiedenen Wechselstellen 25 unterschiedlich groß. Beispielsweise kann der Lagenabstand L an einer Wechselstelle 25 einen ersten Abstandswert L1 und an einer oder mehreren anderen Wechselstellen 25 einen zweiten Abstandswert L2 aufweisen. Dadurch ist es alternativ oder zusätzlich zur Variation der Anzahl der Wechselstellen 25 in einem Gewebebereich 23 des Gewebeteils 15 möglich, die Länge des Fadenvorrats zu variieren, indem die Länge der Polfadenschlaufe 26 durch den Lagenabstand L verändert wird.

Figur 8 zeigt ein weiteres abgewandeltes Ausführungsbeispiel für ein Gewebeteil 15 bzw. ein Ausgangsteil 16. Ein als Polfaden 24 ausgebildeter Verstärkungsfaden 22 bei dieser Ausführungsform nicht nur in der ersten Gewebelage 20, sondern auch in der zweiten Gewebelage 21 vorhanden. Dementsprechend müssen für die jeweiligen Polfadenschlaufen 26 in beiden Lagen Opferfäden 27 vorhanden sein, die sich bei der vorgegebenen äußeren Einwirkung plastisch verformen, auflösen, reißen und/oder zumindest teilweise aufschmelzen und die jeweilige Polfadenschlaufe 26 zum Drapieren des Verstärkungsfadens 22 bzw. Polfadens 24 freigeben.

In dieser Ausführung nach Figur 8 wechseln in Schussrichtung sowohl Opferfäden 27 als auch durch Schussfäden gebildete Verstärkungsfäden, die hier zur Verbesserung der Übersichtlichkeit als zusätzliche Verstärkungsfäden 29 bezeichnet sind, von der jeweiligen ersten Gewebelage 20 in die zweite Gewebelage 21 und umgekehrt.

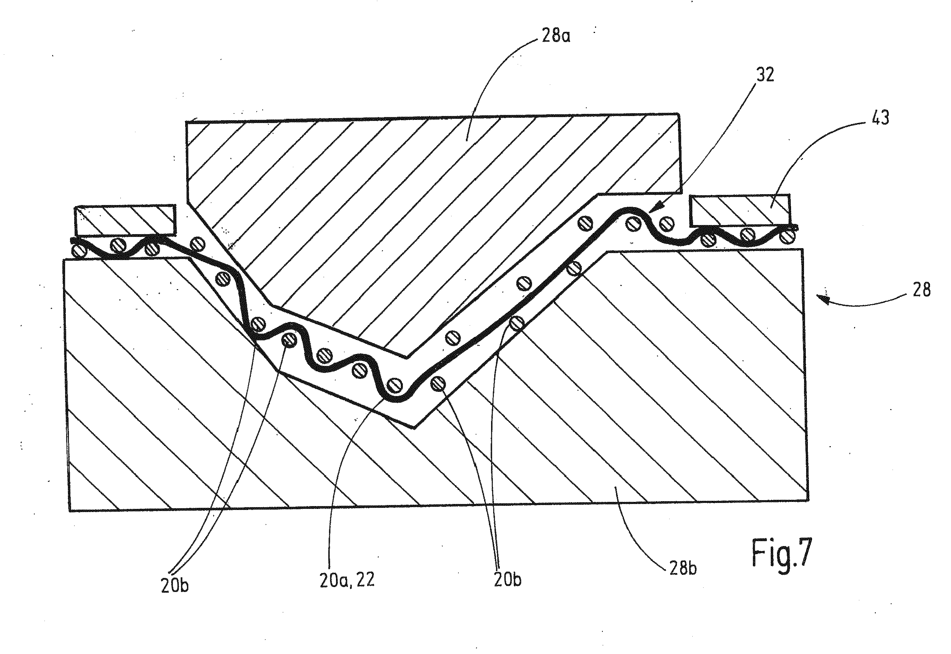

Anhand der Figuren 6 und 7 ist ein Verfahren zur Herstellung eines Vorformteils 17 unter Verwendung einer Pressform 28 veranschaulicht. Die Kontur der Pressform 28 ist dabei lediglich beispielhaft und kann auch beliebig abgewandelt werden.

Die Pressform 28 weist beispielsgemäß zwei relativ zueinander bewegliche und vorzugsweise komplementär zueinander ausgeführte Formteile 28a, 28b auf. Beim Ausführungsbeispiel ist außerdem ein Niederhalter 43 vorhanden, der vorzugsweise ringförmig geschlossen ist und beispielsgemäß das eine, obere Formteil 28a umschließt. Der Niederhalter 43 weist eine Niederhalterfläche 44 auf. Am jeweils anderen Formteil und beispielsgemäß am unteren Formteil 28b oder alternativ um das untere Formteil 28b herum, ist eine Anlagefläche 45 für die Niederhalterfläche 44 vorhanden.

In die Pressform 28 wird das das Ausgangsteil 16 darstellende Gewebeteil 15 (Figur 6) oder alternativ das aus diesem Ausgangsteil 16 hergestellte Zwischenprodukt-Gewebeteil 32 (Figur 7) eingelegt. Bezug nehmend auf Figur 6 kann dann durch die vorgegebene äußere Einwirkung, beispielsgemäß Zufuhr von Wärme W, das Freigeben der Polfadenschlaufen 26 durch zumindest teilweises Aufschmelzen der Opferfäden 27 durchgeführt werden. Hierfür kann beispielsgemäß über zumindest eines der beiden Formteile 28a, 28b Wärme auf das Gewebeteil 15 übertragen werden. Alternativ ist es bei diesen Ausführungsbeispiel auch möglich, dass allein durch die mechanische Zugkraft, die beim Schließen der beiden Formteile 28a, 28b auf die Opferfäden 27 ausgeübt wird, eine Reißen der Opferfäden 27 erfolgt, um die Polfadenschlaufen 26 freizugeben. Auch eine Kombination von unterschiedlichen äußeren Einwirkungen, zum Beispiel mechanische Zugkräfte kombiniert mit Wärmezufuhr, ist möglich.

Bei dem Ausführungsbeispiel gemäß Figur 6 verbleibt die zweite Gewebelage 21 in der Pressform 28 und wird bei der Herstellung des Vorformteils 17 bzw. des schließlich hergestellten faserverstärkten Verbundwerkstoffteils verwendet, beispielsweise zur Bereitstellung der Kunststoffmatrix. Im Unterschied dazu kann wie in Figur 7 veranschaulicht auch lediglich die erste Gewebelage 20 nach dem Trennen oder Auflösen der Opferfäden 27 in Form des Zwischenprodukt-Gewebeteils 32 in die Pressform 28 eingelegt werden.

In beiden Fällen wird ein Vorformteil 17 mit folgendem Verfahrensablauf hergestellt:

Nach dem Einlegen des ursprünglichen Gewebeteils 15 (Ausgangsteil 16) bzw. des Zwischenprodukt-Gewebeteils 32 wird das eingelegte Gewebeteil 15, 32 mit Hilfe des Niederhalters 43 zwischen der Niederhalterfläche 44 und der Anlagefläche 45 ringförmig geklemmt gehalten. Anschließend wird die Pressform 28 geschlossen, indem die beiden Formteile 28a, 28b aufeinander zu bewegt werden. Dabei werden gegebenenfalls noch vorhandene Opferfäden 27 aufgelöst und/oder getrennt. Durch den bereitgestellten Fadenvorrat für die in der dreidimensionalen Pressform 28 angeordneten Verstärkungsfäden 22, der anhand der Polfadenschlaufen 26 zur Verfügung gestellt wird, kann der Verlauf des Verstärkungsfadens 22 an die jeweilige Querschnittskontur der Pressform 28 angepasst werden, so dass sich eine besonders gute Drapierbarkeit bei der Herstellung der Vorform 17 ergibt, wie in Figur 7 veranschaulicht, kann dabei der Abstand der ersten Schussfäden 20a, die mit dem Verstärkungsfaden 22 in der ersten Gewebelage 21 gebunden sind, beim Drapieren verändert werden.

Wie in Figur 7 außerdem veranschaulicht ist, bleiben beispielsgemäß die die Verstärkungsfäden 22 bindenden ersten Schussfäden 20b erhalten, um die Position der Verstärkungsfäden 22 bei der Herstellung des Vorformteils 17 zu fixieren. Hierfür kann insbesondere durch Wärmezufuhr in der Pressform 28 ein Verkleben der ersten Schussfäden 20b mit dem Verstärkungsfäden 22 erfolgen, so dass die durch die Pressform 28 gegebene dreidimensionale Gestalt erhalten bleibt. Es ist somit möglich, das Ausgangsteil 16 zweistufig zu erwärmen. In einer ersten Stufe wird das Ausgangsteil 16 auf eine Temperatur erhöht, die oberhalb der Fließtemperatur der Opferfäden 27 liegt. Diese Temperatur ist jedoch geringer als die Fließtemperatur anderer aus thermoplastischem Material bestehender Fäden und insbesondere der ersten Schussfäden 20b. In einer zweiten Stufe wird die zweite Gewebelage 20 bzw. das Zwischenprodukt-Gewebeteil 32 auf eine höhere Temperatur erwärmt, die die Fließgrenze der die Verstärkungsfäden 22 bindenden anderen Fäden, beispielsweise der ersten Schussfäden 20b, überschreitet, so dass die Fäden 20a, 20b miteinander verkleben. Anschließend kann das auf diese Weise geformte Vorformteil 17 abgekühlt und damit in seiner dreidimensionalen Gestalt stabilisiert werden.

Es sei nochmals ausdrücklich darauf hingewiesen, dass die Verstärkungsfäden 22 anders als bei den beschriebenen bevorzugten Ausführungsbeispielen nicht nur durch erste Kettfäden 20a und/oder zweite Kettfäden 21a, sondern alternativ oder zusätzlich auch durch erste Schussfäden 20b und/oder zweite Schussfäden 21b gebildet sein können. Es ist bei allen Ausführungsbeispielen weiterhin möglich, auch drei oder mehr Gewebelagen vorzusehen.

Wenn ein faserverstärktes Verbundwerkstoffteil in mehr als eine Richtung seiner Außenfläche zugstabilisiert werden soll, können zwei oder mehr der vorstehend beschriebenen Gewebeteile 15, 32, die lediglich Verstärkungsfäden 22 in Schussfadenrichtung oder Kettfadenrichtung aufweisen, gekreuzt übereinander gelegt werden, um die Zugstabilität in mehr als einer Dimensionen zu erreichen.

Die Erfindung betrifft ein Gewebeteil 15 als Ausgangsteil 16 oder ein Zwischenprodukt-Gewebeteil 32 sowie ein Verfahren zur Herstellung eines Vorformteils 17, das als Basis für die Herstellung eines faserverstärkten Verbundmaterialteils dienen kann. Das als Ausgangsteil 16 dienende Gewebeteil 15 hat eine erste Gewebelage 20 mit ersten Kettfäden 20a und ersten Schussfäden 20b. Entsprechend hat die zweite Gewebelage 21 zweite Kettfäden 21a und zweite Schussfäden 21b. Zumindest in einer Gewebelage 20, 21 sind mehrere Verstärkungsfäden 22 vorhanden. Die Verstärkungsfäden 22 können durch jeweilige Kettfäden 20a, 21a und/oder durch Schussfäden 20b, 21b gebildet werden. Zumindest ein Teil der Verstärkungsfäden 22 bildet jeweils einen Polfaden 24, der zwischen den beiden Gewebelagen 20, 21 einer Wechselstelle 25 einen Polfadenwechsel unter Bildung einer Polfadenschlaufe 26 ausführt. Die Polfadenschlaufe 26 ist um wenigstens einen Opferfaden 27 herumgeführt. Der Opferfaden 27 ist gegenüber den verwendeten Verstärkungsfäden 22 derart anders ausgeführt, dass er bei einer vorgegebenen äußeren Einwirkung, beispielsweise durch Zufuhr von Wärme W, reißt und/oder sich zumindest teilweise auflöst und/oder sich elastisch verformt und dadurch einen durch die Polfadenschlaufe 26 gebildeten Fadenvorrat für den Verstärkungsfaden 22 freigibt. Die Verstärkungsfäden 22 werden durch die vorgegebene äußere Einwirkung nicht beschädigt und insbesondere in ihrer Zugfestigkeit nicht beeinträchtigt. Die Position und/oder die Anzahl der Wechselstellen 25 und/oder der Lagenabstand L an einer jeweiligen Wechselstelle 25 ist bei dem Gewebeteil 15 derart vorgegeben, dass die zusätzliche Fadenlänge, die durch die Polfadenschlaufen 26 bereit gestellt ist, das Drapieren des jeweiligen Polfadens an die dem jeweiligen Polfaden 24 zugeordnete Querschnittskontur der herzustellenden dreidimensionalen Form angepasst ist, so dass die Gesamtlänge des Polfadens 24 möglichst genau mit der Länge der zugeordneten Querschnittskontur der herzustellenden dreidimensionalen Form übereinstimmt.

### Bezugszeichenliste:

- 15: Gewebeteil
- 16: Ausgangsteil
- 17: Vorfotmteil

- 20: erste Geweblage
- 20a: erster Kettfaden
- 20b: erster Schussfaden
- 21: zweite Gewebelage
- 21a: zweiter Kettfaden
- 21b: zweiter Schussfaden
- 22: Verstärkungsfaden
- 23: Gewebebereich
- 24: Polfaden
- 25: Wechselstelle
- 26: Polfadenschlaufe
- 27: Opferfaden
- 28: Pressform
- 28a: Formteil
- 28b: Formteil
- 29: zusätzlicher Verstärkungsfaden

- 31: Zwischenprodukt
- 32: Zwischenprodukt-Gewebeteil
- 33: erster Gewebeabschnitt
- 34: zweiter Gewebeabschnitt
- 35: Form
- 36: Ausgangsebene
- 37: erste Zwischenebene
- 38: zweite Zwischenebene
- 43: Niederhalter
- 44: Niederhalterfläche
- 45: Anlagefläche

- h1: erste Höhe
- h2: zweite Höhe
- h3: dritte Höhe
- hg: Gesamthöhe

- L: Lagenabstand
- L1: erster Abstandswert
- L2: zweiter Abstandswert

## Patentansprüche

1. Gewebeteil (15) zum Umformen in eine dreidimensionale Form,
mit einer ersten Gewebelage (20), in der erste Schussfäden (20b) und erste Kettfäden (20a) miteinander in einer Bindung stehen,
mit einer zweiten Gewebelage (21), in der zweite Schussfäden (21b) und zweite Kettfäden (21a) miteinander in einer Bindung stehen,
wobei zumindest in einer Gewebelage (20) zumindest einige der Schussfäden (20b) und/oder Kettfäden (20a) als Verstärkungsfäden (22) ausgeführt sind, die gegenüber den anderen Schussfäden (20b, 21b) und/oder Kettfäden (20a, 21a) ein größere Zugfestigkeit und/oder Zugsteifigkeit aufweisen,
wobei mehrere der Verstärkungsfäden (22) als Polfäden (24) ausgeführt sind, die jeweils an einer oder an mehreren Wechselstellen (25) einen Polfadenwechsel in die jeweils andere Gewebelage (21) und zurück ausführen,
wobei jeder Polfaden (24) an jeder Wechselstelle (25) wenigstens einen als Opferfaden (27) ausgeführten Schussfaden (21b) oder Kettfaden (21a) der jeweils anderen Gewebelage (21) umschlingt und wobei die Opferfäden (27) verglichen mit den Verstärkungsfäden (22) derart ausgeführt sind, dass die Opferfäden (27) durch eine vorgegebene äußere Einwirkung (W) reißen und/oder sich plastisch dehnen und/oder sich zumindest teilweise auflösen und/oder zumindest teilweise aufschmelzen, wohingegen zumindest die Verstärkungsfäden (22) bei dieser vorgegebenen äußeren Einwirkung unbeschädigt bleiben.

2. Gewebeteil nach Anspruch 1,
**dadurch gekennzeichnet, dass** eine sich zwischen den beiden Gewebelagen (20, 21) vorhandene Polfadenschlaufe (26) eines Polfadens (24) an jeder Wechselstelle (25) einen Fadenvorrat zur Anpassung des betreffenden Polfadenlänge an die herzustellende dreidimensionale Form bildet.

3. Gewebeteil nach Anspruch 1 oder 2, **dadurch gekennzeichnet, dass** die Struktur und/oder die Zugfestigkeit der Verstärkungsfäden (22) bei der die Opferfäden (27) vorgegebenen äußeren Einwirkung (W) erhalten bleibt.

4. Gewebeteil nach einem der vorhergehenden Ansprüche,
**dadurch gekennzeichnet, dass** die vorgegebene äußere Einwirkung eine vorgegebene Zugkraft ist und die Opferfäden bei dieser Zugkraft reißen, wohingegen zumindest die Verstärkungsfäden (22) durch diese Zugkraft unbeschädigt bleiben.

5. Gewebeteil nach einem der vorhergehenden Ansprüche,
**dadurch gekennzeichnet, dass** die vorgegebene äußere Einwirkung eine vorgegebene Wärmestrahlung und/oder elektromagnetische Strahlung und/oder Ultraschallanregung ist, durch die die Opferfäden (27) aufgrund der eingetragenen Energie schmelzen, wohingegen zumindest die Verstärkungspolfäden (22) durch diese Wärmestrahlung und/oder elektromagnetischen Strahlung und/oder Ultraschallanregung unbeschädigt bleiben.

6. Gewebeteil nach einem der vorhergehenden Ansprüche, **dadurch gekennzeichnet, dass** die vorgegebene äußere Einwirkung der Kontakt mit einem chemischen Mittel ist, durch das sich die Opferfäden (27) auflösen, wohingegen zumindest die Verstärkungsfäden (22) durch dieses chemische Mittel unbeschädigt bleiben.

7. Gewebeteil nach einem der vorhergehenden Ansprüche, **dadurch gekennzeichnet, dass** die Positionen und/oder die Anzahl der Wechselstellen (25) und/oder der Abstand (L) der beiden Gewebelagen (20, 21) an der jeweiligen Wechselstelle (25) abhängig von der herzustellenden dreidimensionalen Form vorherbestimmt sind.

8. Gewebeteil nach einem der vorhergehenden Ansprüche, **dadurch gekennzeichnet, dass** die Länge mehrerer Polfäden (24) bei einer vorgegebenen Länge des Gewebeteils (15) unterschiedlich groß ist.

9. Gewebeteil nach einem der vorhergehenden Ansprüche, **dadurch gekennzeichnet, dass** der Abstand (L) zwischen den beiden Gewebelagen (20, 21) des Gewebeteils (15) an verschiedenen Wechselstellen (25) unterschiedlich groß ist.

10. Gewebeteil nach einem der vorhergehenden Ansprüche, **dadurch gekennzeichnet, dass** die Polfäden (24) von ersten und/oder zweiten Kettfäden (20a, 21a) und/oder dass die Opferfäden (27) durch die ersten und/oder zweiten Schussfäden (20b, 21b) gebildet sind.

11. Gewebeteil nach einem der vorhergehenden Ansprüche, **dadurch gekennzeichnet, dass** die Verstärkungsfäden (22) Aramid und/oder Kohlestoff und/oder Glas und/oder Metall und/oder Keramik und/oder Silikat aufweisen und/oder dass die Opferfäden (27) thermoplastisches Material aufweisen.

12. Gewebeteil nach einem der vorhergehenden Ansprüche, **dadurch gekennzeichnet, dass** der Faservolumenanteil der Opferfäden (27) von 40% bis zu 60% beträgt, wenn die Opferfäden (27) aus thermoplastischem Material bestehen.

13. Gewebeteil (32)
mit wenigstens einer Gewebelage (20), in der Schussfäden (20b) und Kettfäden (20a) miteinander in einer Bindung stehen,
wobei zumindest einige der Schussfäden (20b) und/oder Kettfäden (20b) als Verstärkungsfäden (22) ausgeführt sind, die gegenüber den anderen Schussfäden (20b) und/oder Kettfäden (20a) eine größere Zugfestigkeit und/oder Zugsteifigkeit aufweisen,
und wobei in dieser Gewebelage (20) wenigstens ein Abschnitt (34) vorhanden ist, in dem die Verstärkungsfäden (22) unter Bereitstellung eines Fadenvorrats schlaff mit den jeweils anderen Fäden (20b) gebunden sind.

14. Verfahren zur Herstellung eines dreidimensionalen Vorformteils mit folgenden Schritten:
- Herstellen oder Bereitstellen eines Gewebeteils (15) mit einer ersten Gewebelage (20), in der erste Schussfäden (20b) und erste Kettfäden (20a) miteinander in einer Bindung stehen, und mit einer zweiten Gewebelage (21), in der zweite Schussfäden (21b) und zweite Kettfäden (21a) miteinander in einer Bindung stehen, wobei zumindest in einer Gewebelage (20) zumindest einige der Schussfäden (20b) und/oder Kettfäden (20a) als Verstärkungsfäden (22) ausgeführt sind, die gegenüber den anderen Schussfäden (20b, 21b) und/oder Kettfäden (20a, 21a) ein größere Zugfestigkeit und/oder Zugsteifigkeit aufweisen, wobei mehrere der Verstärkungsfäden (22) als Polfäden (24) ausgeführt sind, die an einer oder an mehreren Wechselstellen (25) einen Polfadenwechsel in die jeweils andere Gewebelage (21) und zurück ausführen, und wobei jeder Polfaden (24) an jeder Wechselstelle (25) einen als Opferfaden (27) ausgeführten Schuss- oder Kettfaden (21b) der jeweils anderen Gewebelage (21) umschlingt,
- Entfernen und/oder Dehnen und/oder Trennen und/oder zumindest teilweise Aufschmelzen und/oder zumindest teilweises Auflösen der Opferfäden (27) durch eine vorbestimmte äußere Einwirkung (W), so dass die zwischen den beiden Gewebelagen (20, 21) gebildeten Polfadenschlaufen (26) für die dreidimensionale Formbildung zur Verfügung stehen.

15. Verfahren nach Anspruch 14, **dadurch gekennzeichnet, dass** das Gewebeteil (15) nach oder während der äußeren Einwirkung auf die Opferfäden (27) in eine dreidimensionale Form drapiert wird.

16. Verfahren nach Anspruch 14 oder 15, **dadurch gekennzeichnet, dass** sich der Abstand der Kett- oder Schussfäden (20a, 20b) im Bereich der freigegebenen Polfadenschlaufe (26) beim Drapieren des Gewebeteils (15) ändert, die mit dem betreffenden Polfaden (24) in Bindung stehen.

17. Verfahren nach einem der Ansprüche 14 bis 16,
**dadurch gekennzeichnet, dass** das Entfernen und/oder Dehnen und/oder Trennen und/oder Schmelzen der Opferfäden (27) dadurch erfolgt, dass das Gewebeteil (15) auf eine Temperatur erwärmt wird, die zumindest der Fließtemperatur der Opferfäden (27) entspricht.

18. Verfahren nach Anspruch 17, **dadurch gekennzeichnet, dass** das Erwärmen des Gewebeteils (15) in einer Pressform (28) erfolgt.

19. Verfahren nach Anspruch 17 oder 18, **dadurch gekennzeichnet, dass** das Gewebeteil (15) in erwärmtem Zustand mittels einer Pressform (28) verformt wird.

20. Verfahren nach einem der Ansprüche 17 bis 19, **dadurch gekennzeichnet, dass** das verformte Gewebeteil anschließend abgekühlt wird.

21. Verfahren nach einem der Ansprüche 14 bis 20,
**dadurch gekennzeichnet, dass** die Polfadenschlaufen (26) durch Lanzetten und Blindschüsse aus dem Schusseintrag eines Schussfadens (20b, 21b) der jeweils anderen Gewebelage gebildet werden, wobei durch die Blindschüsse die Opferfäden (27) gebildet sind.
